(19) Europäisches Patentamt
European Patent Office
Office européen des brevets

(11) Veröffentlichungsnummer: **0 363 486 A1**

(12) # EUROPÄISCHE PATENTANMELDUNG veröffentlicht nach Art. 158 Abs. 3 EPÜ

(21) Anmeldenummer: 88905466.4

(51) Int. Cl.⁵: **A01N 57/02 , A01H 1/02**

(22) Anmeldetag: **17.03.88**

(86) Internationale Anmeldenummer:
**PCT/SU88/00058**

(87) Internationale Veröffentlichungsnummer:
**WO 89/08401 (21.09.89 89/23)**

(43) Veröffentlichungstag der Anmeldung:
**18.04.90 Patentblatt 90/16**

(84) Benannte Vertragsstaaten:
**CH DE FR GB IT LI**

(71) Anmelder: **VSESOJUZNY NAUCHNO-ISSLEDOVATELSKY INSTITUT SELSKOKHOZAISTVENNOI BIOTEKHNOLOGII VSESOJUZNOI AKADEMII SELSKOKHOZYAISTVENNYKH NAUK IMENI V.I. LENINA**
**ul. Pskovskaya 12-4 Moscow, 127253(SU)**

Anmelder: **INSTITUT FIZIOLOGICHESKI AKTIVNYKH VESCHSTV AKADEMII NAUK SSSR**
**Noginsky raion, Moskovskaya obl. Pos. Chernogolovka, 14232(SU)**

(72) Erfinder: **FEDIN, Marat Alexandrovich**
**ul. Dm.Ulyanova, 24-158**
**Moscow, 107078(SU)**
Erfinder: **KUZNETSOVA, Tatyana Alexandrovna**
**Khoroshevskoe shosse, 36b-62**
**Moscow, 123007(SU)**
Erfinder: **VOSKOBOINIK, Leonid Konstantinovich**
**ul. Pushkina, 35-6**
**Krasnodar, 350023(SU)**
Erfinder: **FEDORENKO, Tatyana Sergeevna**
**ul. Shkolnaya, 11-23**
**Krasnodar, 350038(SU)**
Erfinder: **PROKOPENKO, Alexandra Ivanovna**
**ul. Peredovaya, 74-24**
**Krasnodar, 350038(SU)**
Erfinder: **MARTYNOV, Ivan Vasilievich**
**pr. Mira, 112-221**
**Moscow, 129626(SU)**
Erfinder: **BELOV, Jury Petrovich ul. Tsentralnaya, 4-85**
**Noginsky raion Moskovskaya obl.**
**pos. Chernogolovka, 142432(SU)**
Erfinder: **KORMACHEV, Vyacheslav Vasilievich**
**ul. Elgera, 16-161**
**Cheboxary, 428017(SU)**
Erfinder: **KOLYAMSHIN, Oleg Aktarievich**
**ul. Dekabristov, 14-1-105**
**Cheboxary, 428022(SU)**
Erfinder: **SAVCHUK, Valentin A.**
**Opytnaya stantsia VIR Globinsky raion**
**Poltavskaya obl. selo Ustimovka, 315967(SU)**
Erfinder: **SHEVNITSYN, Leonid Sergeevich**
**ul. Vinokurova, 7-31**
**Novocheboxarsk, 428900(SU)**
Erfinder: **SMIRNOV, Valery Valerievich**
**bulvar Gidrostroitelei, 6-10**
**Novocheboxarsk, 428900(SU)**
Erfinder: **GRADOV, Viktor Alexandrovich**
**ul. Vinokurova, 7-16**
**Novocheboxarsk, 428900(SU)**
Erfinder: **PAKLIN, Sergei Ivanovich**
**ul. Malaya Filevskaya, 66-30**
**Moscow, 121433(SU)**
Erfinder: **NOVIKOVA, Svetlana Alexandrovna**
**ul. Shirokaya, 19-2-176**
**Moscow, 129224(SU)**
Erfinder: **VISHNYAKOV, Alexandr Alexandrovich**
**ul. 2 Parkovaya, 2/16**
**Moskovskaya obl. Mytischi, 141011(SU)**
Erfinder: **AXINENKO, Alexei Jurievich Shkolny bulvar, 1b-59a**
**Noginsky raion Moskovskaya obl.**

EP 0 363 486 A1

**pos. Chernogolovka, 142432(SU)**
Erfinder: **RUDAKOVA, Marina Garievna**
**ul. Flotskaya, 26-102**
**Moscow, 125493(SU)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) **Verfahren zur Sterilisation der Staubbeutel.**

(57) Die vorliegende Erfindung bezieht sich auf das Gebiet Landwirtschaft.

Das Verfahren zur Sterilisation der Staubbeutel von Pflanzen sieht die Behandlung der Pflanzen mit einem Sterilisationsmittel in Verbindung mit einem Verdünner in der fünften und/oder sechsten Periode der Organogenese vor. Erfindungsgemäss verwendet man als Sterilisationsmittel Phosphorsäurederivate der allgemeinen Formel:

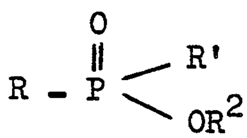

worin R für H, Alkoxy mit 1 bis 4 C-Atomen, Dimethylamin, 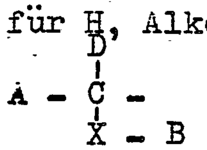 steht, worin X = O, NH; B = H, Alkyl mit 1 bis 4 C-Atomen, Phenyl; D = H, $CH_3$; A Alkyl mit 1 bis 4 C-Atomen, Phenyl, Furyl bedeutet; $R^1$ für OH, $ONH_4$, $OAlk(C_1\text{-}C_4)$, Phenyl steht; $R^2$ für Alkyl mit 1 bis 4 C-Atomen, Na, $NH_4$, $NH_3Alk(C_1\text{-}C_4)$, $NH_2(Alk)_2(C_1\text{-}C_4)$ steht, oder deren Gemische.

Das erfindungsgemässe Verfahren findet seine Verwendung in der Selektion und Samenbau.

EPAA-38391.5

# VERFAHREN ZUR STERILIZATION DER STAUBBEUTEL VON PFLANZEN

## Gebiet der Technik

Die vorliegende Erfindung bezieht sich auf die Biologie und Landwirtschaft, insbesondere auf ein Verfahren zur Sterilization der Staubbeutel von Pflanzen, welches in der Selektion und im Samenbau zur Verwendung kommt.

## Zugrundeliegender Stand der Technik

Heute wird in der Welt die Aufgabe, die Landwirtschaft zu intensivieren, insbesondere die Ertragsfähigkeit von Getreide-, Futter-, Gemüse- und technischen Kulturen durch breite Verwendung von Hybriden der ersten Generation zu steigern, gelöst. Wegen ihrer Hybridkraft unterscheiden sich die Hybride von den Elternformen in einer höheren Leistung (um 25 bis 30%) und einer besseren Produktqualität. Es besteht ein Verfahren zur Erzeugung von neuen Hybriden, welches einem System "zytoplasmatische Pollensterilität-Rosterer der Fertilität" bezuht. Diesem Verfahren liegt eine fortwährende (innerhalb von 12 bis 14 Jahren) und komplizierte Selektionsarbeit zugrunde, die das Schaffen von sterilen Alaloga, Fixatoren der Sterilität und Restorern der Fertilität umfasst. Besonders aussichtsreich sind Verfahren, die auf der Sterilisation der Staubbeutel von Pflanzen mit chemischen Sterilisationsmitteln (Gametoziden) basieren. Die Verwendung von Gametoziden ist bedeutend wirtschaftlicher als die des Systems "zytoplasmatische Pollensterilität", weil die Notwendigkeit entfällt, solche Formen wie steriles Analogon für die Fixierung der Sterilität bei mütterlichen Formen und für die Restauration der Fertilität bei väterlichen Formen zu erzeugen. Man kann praktisch die Samen von Hybriden der ersten Generation sowohl im Laufe der Selektionsforschung von Ausgangsformen als auch bei der Organisation ihrer technischen Herstellung gewinnen.

Zur Zeit sind etwa 200 Verbindungen gefunden, welche eine gametozide Aktivität besitzen und ihrer chemischen Struktur nach zu verschiedenen Klassen von chemischen Verbindungen gehören. Gametozide müssen volle Pollensterilität bei behandelten Pflanzen unter Erhaltung der Lebensfähigkeit von Eizellen bewirken und eine ausreichend hohe Fähigkeit (mindestens 70% der Kontrolle) den Fruchtknoten unter freier Bestäubung zu bilden, sicherstellen. Die Werte ihrer Phytotoxizität und Toxizität für Warmblüter müssen minimal sein.

Bekannt sind Verfahren zur Sterilisation der Staubbeutel von Getreidekulturen (L.Dzh. Nikell. Regulatory rosta rasteny. Primenenie v selskom khozyaistve, Moskva, izdatelstvo "Kolos", I984, S. 28-31; SU, A, 906457). L.J.Nikell. Waschstumsregulatoren von Pflanzen. Anwendung in der Landwirtschaft. Moskau, Verlag "Kolos", 1984, S. 28-31), welche in der Behandlung von Pflanzen mit Sterilisationsmitteln wie 2-Chloräthylphosphonsäure (Ethrel), Maleinsäureanhydrid, Di-(polyfluoralkyl)-phosphorsäuren und ihre Salze u.a. bestehen. Die Behandlung der Pflanzen mit Sterilisationsmitteln erfolgt in der V. oder VI. Periode der Organogenese (nach F.M. Kupermann).

In der V. Periode der Organogenese setzen die Prozesse der Bildung und der Differenzierung von Blüten ein. Gegen Ende dieser Periode entstehen Neubildungen, sporogene Archesporgewebe. Während dieser Periode kommt es zur Anlegung von Steubblättern, Stempel und Blütenhülle. In der V. Periode tritt die Differenzierung des Höchers von Staubblättern in Staubfaden und Stempel in Erscheinung. Die VI. Periode ist durch Ablauf der Prozesse der Blüttenbildung (Mikro- und Makrosporogenese) gekennzeichnet. In dieser Periode werden gesonderte einkernige

Pollenkörper gebildet (F.M.Kupermann. Morfofiziologia rasteny.(Moskva),izdatelstvo "Wysshaya shkola", I973, S. 30-36. Morphophysiologie von Pflanzen. Moskau, Verlag " Wysshaya schkola", I973, S. 30-36).

Bekannt ist weiter ein Verfahren zur Sterilisation der Staubbautel von Graspflanzen (GB, A, 1567153), das darin besteht, dass man die Behandlung von Graspflanzen mit einem Sterilisationsmittel in der Periode durchführt, die zwischen Auftreten des zweiten Stengelgliedes und Ährenschieben liegt. Als sterilisationsmittel verwendet man heterozyklische Verbindungen, deren Hauptvertreter 2-Karboxy-3,4-methanpyrrolidin oder 2-Methoxykarbonyl-3,4-methanpyrrolidin sind. Die angegebenen Verbindungen werden in Verbindung mit Verdünnungsmitteln und oberflächenaktiven Stoffen eingesetzt.

## Offenbarung der Erfindung

Der Erfindung liegt die Aufgabe zugrunde, durch die Wahl von neuen Sterilisationsmitteln ein Verfahren zu entwickeln,das es möglich macht, dieses Verfahren zur Sterilisation der Staubbeutel eines breiten Spektrums von Kulturen mit hohem Sterilisationsgrad unter Erhaltung der hohen Fähigkeit von Samen, Fruchtansätze bei freier Bestäubung zu bilden, zu verwenden.

Die Aufgabe wird dadurch gelöst, dass im vorgeschlagenen Verfahren zur Sterilisation der Staubbeutel von Pflanzen durch ihre Behandlung mit einem Sterilisationsmittel in Verbindung mit einem Verdünner in der fünften und/oder sechsten Periode der Organogenese erfindungsgemäss als Sterilisationsmittel Phosphorsäurederivate der allgemeinen Formel

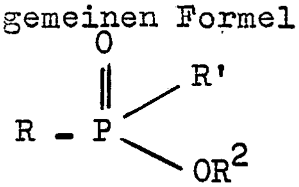

worin R für H, Alkoxyl mit 1 bis 4 C-Atomen, Dimethylamin, 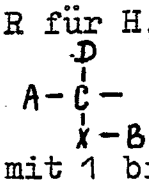 steht, und worin X = O, NH; B = H, Alkyl mit 1 bis 4 C-Atomen, Phenyl, D = H, $CH_3$; A Alkyl mit 1 bis 4 C-Atomen, Phenyl, Furyl bedeutet;
R' für OH, $ONH_4$, $OAlk(C_1-C_4)$, Phenyl steht,
$R^2$ für Alkyl mit 1 bis 4 C-Atomen, Na, $NH_4$, $NH_3Alk(C_1-C_4)$ $NH_2(Alk)_2(C_1-C_4)$ steht, oder deren Gemische dienen.

Das Sterilisationsmittel kann in Verbindung mit einem beliebigen bekannten und dazu geeigneten Verdünner verwendet werden. Es ist zweckmässigerweise in Verbindung mit Wasser als 0, 1- bis 2%ige Emulsion zu benutzen. Als Pflanzen, die mit dem angegebenen Sterilisationsmittel behandelt werden, dienen bevorzugt Graspflanzen oder Sonnenblume.

Das erfindungsgemässe Verfahren ermöglicht, die männliche Sterilität von Pflanzen (98-100%) zu erzielen und eine hohe Fähigkeit zum Ansetzen (über 70%) zu erhalten. Zwecks Erzielung des hohen Sterilisationsgrades von Staubbeuteln unter ungünstigen Klimabedingungen wird die Behandlung von Pflanzen mit dem Sterilisationsmittel in der fünften und/oder sechsten Periode der Organogenese (nach Kupermann) wiederholt.

## Beste Ausführungsvariante der Erfindung

Das erfindungsgemässe Verfahren wird wie folgt durchgeführt.

Pflanzen wie z.b. Winter- und Sommerweizen, diploider und tetraploider Roggen, Tritikale, Hirse, Sonnenblume u.a. werden mit einem Sterilisationsmittel behandelt, wobei als solche Pholphorsäurederivate der allgemeinen Formel:

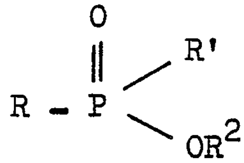

worin R für H, Alkoxyl mit 1 bis 4 C-Atomen, Dimethylamin, 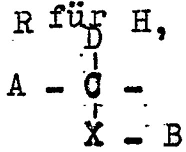 steht, und worin X = O, NH; B = H, Alkyl mit 1 bis 4 C-Atomen, Phenyl; D = H, $CH_3$; A Alkyl mit 1 bis 4 C-Atomen, Phenyl, Furyl bedeutet; R' für OH, $ONH_4$, $OAlk(C_1-C_4)$,Phenyl steht, $R^2$ für Alkyl mit 1 bis 4 C-Atomen, Na, $NH_4$, $NH_3Alk(C_1-C_4)$, $NH_2(Alk)_2(C_1-C_4)$ steht, oder deren Gemische dienen.

Phosphorsäurederivate können in Verbindung mit beliebigen geeigneten Verdünnern verwendet werden. Als Verdünner ist Wasser zweckmässigerweise zu benutzen. Dabei ist 0,1- bis 2%ige wässrige Emulsion oder die Lösung der angegebenen Verbindungen vorteilhaft zu verwenden.

Mann kann den gebrauchsfertigen Lösungen beliebige geeignete oberflächenaktive Stoffe wunschgemäss zusetzen. Beim Aufbringen auf die Pflanzen sind gewöhnlich den gebrauchsfertigen Lösungen beliebige bekannte Hilfsmittel wie Netzmittel, Dispergiermittel und Akhäsionsmittel zweckmässigerweise hinzuzufügen.

Das Sterilisationsmittel lässt sich auf Pflanzen nach verschiedenen Behandlungsverfahren wie Flüssigkeitszerstäubung und Luftzerstäubung (Aerosole) aufbringen. Die Behandlung von Pflanzen mit dem Sterilisationsmittel erfolgt in der fünften und/oder sechsten Periode der Organogenese (nach Kupermann). Die Aufwanddosis des Sterilisationsmittels hängt von Natur der Verbindung, von zu behandelnder Kultur, Behandlungsperiode und natürlichen Klimafaktoren ab. Um den hohen Sterilisationseffekt unter ungünstigen Klimabedingungen sicherzustellen, ist es zweckmässig, die wiederholte Behandlung von Pflanzen in der VI. Periode der Organogenese durchzuführen. Die Gesamtdosis des Sterilisationsmittels beträgt 0,6 bis 20 kg/ha.

Alle erfindungsgemässen Phosphorsäurederivate, die als Sterilisationsmittel zur Verwendung kommen, waren auf die Toxizität im Tiervarsuch geprüft. Die Prüfergebnisse haben ergeben, dass die angegebenen Verbindungen von schwacher oder mittlerer Toxizität sind.

So weisen beispielsweise die erfindungsgemässen Verbindungen Mononatriumphosphit, Monomethylammoniumphosphit, Diammoniumphosphit, Monoammoniumphosphit, Methylammoniummonobutylphosphit; Dimethylammoniummonomethylphosphit, Triäthylphosphit, Dimethylphosphit, Diäthylphosphit, Diisopropylphosphit $LD_{50}$ = 1000-4000 mg/kg Tiergewicht auf. Alle anderen Derivate der Phosphorsäuren weisen $LD_{50} \geqslant 1000$ mg/kg auf.

Man stellt die Phosphorsäurederivate nach den bekannten Verfahren, beispielsweise durch Umsetzung einer entsprechenden Karbonylverbindung mit Amin und Hydrophosphorylverbindung oder durch Umsetzung von Alkoholen mit Phosphortrichlorid, oder durch Umsetzung einer entsprechenden Base mit Säurekomponenten her.

Die gametozide Aktivität der erfindungsgemässen Sterilisationsmittel war in Feldversuchen in verschiedenen Bodenklimatischen Zonen mit Teilstücken von 10 $m^2$ Grösse in zwei, drei- bis viermaliger Wiederholung festgestellt. Jedes Sterilisationsmittel wurde mindestens 5 Jahre lang geprüft.

Die Entwicklung der Perioden der Organogenese wird zytologischen überwacht. Die Behandlung von Pflanzen mit dem Sterilisationsmittel erfolgt am Anfang der fünften Periode der Organogenese nach Kupermann.

Mit dem Ährenschieben verwirklicht man die Isolierung von Hauptähren und anderen Stockwerken in Pergamentbeuteln. Bei Weizen und Tritikale werden Einzelisolatoren benutzt. Bei Roggen schliesst man Ähre von 5 bis 7 verscheidenen nebeneinander befindlichen Pflanzen in einen gemeinsamen Isolator ein. Bei Hirse wird jede

Rispe getrennt isoliert. Der Sterilisationsprozentsatz (X) für Weizen, Roggen, Tritikale und Hirse wird nach der Formel

$$X = \left(1 - \frac{\text{Anzahl der in einem Isolator befruchteten Samen von behandelten Pflanzen}}{\text{Anzahl der in einem Isolator befruchteten Samen von unbehandelten Kontrollpflanzen}}\right) \cdot 100\%$$

ermittelt

Die Kornzahl in nicht isolierten Ähren von Kontrollpflanzen wird bedingt für 100% Ansetzen bei freier Bestäubung angenommen.

Um zuverlässige Angaben zu erhalten, verwendet man 20 bis 25 Isolatoren jeder Wiederholung für Weizen und Tritikale, 10 bis 15 Isolatoren jeder Wiederholung für Roggen und Hirse.

Zur Kontrolle der chemischen Sterilisation des Sonnenblumenpollens werden für jede Verbindung 45 behandelte Pflanzen jeder Wiederholung benutzt, wobei 15 Pflanzen zwecks Selbsbestäubung des Blütenkorbchens isoliert werden, 15 Pflanzen mit einem Pollengemisch, gesammelt von 20 bis 25 behandelten isolierten Körbchen, bestäubt werden, und 15 Pflanzen für freie Bestaubung gelassen werden, damit das Ansetzen von Achänen mit dem Pollen der Vaterform kontrolliert werden kann.

Man beurteilt die Pollensterilität von Pflanzen der Sonnenblume nach der Pollensterilität und -keimfähigkeit, nach den morphologischen Besonderheiten von Spermien und nach der Fähigkeit von Achänen zum Ansetzen durch Bestäubung der behandelten isolierten Pflanzen mit dem Pollen der unbehandelten väterlichen Form. Die Lebensfähigkeit der Eizelle wird nach der Samenbildung bei behandelten Pflanzen bei freier Bestäubung der väterlichen Form bestimmt.

Es ist wünschenswert, die Behandlung von Pflanzen bei heiterem windstillem Wetter durchzuführen.

Alle Verbindungen dringen in die Gewebe von Pflanzen im Verläufe von 4 Stunden ein. Im Falle der atmosphärischen Niederschläge innerhalb von 4 Stunden ist es notwendig, Pflanzen in der VI. Periode der Organogenese wiederholt zu behandeln.

Zum einem besseren Verstehen der vorliegenden Erfindung werden folgende Ausführungsformen des erfindungsgemässen Verfahrens angeführt.

Beispiele 1 bis 12

Pflanzen des Winterweizens Sorte Mironovskaya 808 werden in der V. Periode der Organogenese (nach Kupermann) mit Hilfe einer Rückenspritze durch Zerstäubung einer 2%igen wässrigen Emulsion folgender Sterilisationsmittel: Diäthyl-N-methyl- α -aminobenzylphosphonat, Diäthyl-N-phenyl- α -aminofurylmethylphosphonat, Dimetyl-N-äthyl- α -aminobenzylphosphonat, Dimethyl-N-methyl-2-aminofurylmethylphosphonat, Diäthyl-N-methyl-2-aminofurylmethylphosphonat, Diäthyl- α -amino- α -methylprorylphosphonat, Diäthyl- α -oxyfurylmethylphosphonat, Diäthyl-N,N-dimethylamidophosphat, Diäthyl-N-methyl- α -aminofurylmethylphosphonat, Diäthyl- α -aminoäthylphosphonat, Diäthyl-N-äthyl- α -aminofurylmethylphosphonat, Diisopropyl-N-methyl- α -aminofurylmethylphosphonat behandelt.

Als Emulgator setzt man 0,1 Masse % Kalziumalkylbenzolsulfonat mit 12 bis 14 C-Atomen zu. Man führt in die Emulsion als Adjuvans 0,01 Masse% Dimethylsulfoxid ein. Der Verbrauch an Präparat beträgt 20 kg/ha. Als Kontrolle dienen Pflanzen, behandelt mit einem Verdünner ohne Sterilisationsmittel. Die Prüfergebnisse sind in der Tabelle 1 angeführt. Die ähnlichen Ergebnisse sind bei der Behandlung von Pflanzen in der VI. Periode der Organogenese erhalten.

Tabelle 1

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| 1 | Kontrolle | 38,3 | 0,0 | 4I,0 | I00,0 |
| 2 | Beispiel 1 | 0,0 | I00,0 | 33,8 | 82,4 |
| 3 | Beispiel 2 | 0,I | 99,7 | 36,9 | 90,0 |
| 4 | Beispiel 3 | 0,3 | 99,2 | 39,7 | 96,8 |
| 5 | Beispiel 4 | I,5 | 96,I | 40,2 | 98,0 |
| 6 | Beispiel 5 | 0,0 | I00,0 | 35,4 | 86,3 |
| 7 | Beispiel 6 | 0,6 | 98,4 | 37,8 | 92,2 |
| 8 | Beispiel 7 | 2,6 | 93,2 | 34,9 | 85,I |
| 9 | Beispiel 8 | 0,2 | 99,5 | 36,6 | 89,3 |
| I0 | Beispiel 9 | 0,0 | I00,0 | 37,I | 90,5 |
| 11 | Beispiel I0 | 0,0 | I00,0 | 35,4 | 86,3 |
| 12 | Beispiel 11 | I,6 | 95,8 | 28,0 | 68,3 |
| 13 | Beispiel 12 | 0,8 | 97,9 | 40,7 | 99,3 |

Beispiele 13 bis 23

Pflanzen des Winterweizens Sorte Priboi behandelt man in der V.Periode der Organogenese (nach Kupermann) durch Zerstäubung einer 2%igen wässrigen Emulsion folgender Sterilisationsmittel: Dyäthyl-N-methyl-α-aminobenzylphosphonat, Dyäthyl-N-phenyl-α-aminofurylmethylphosphonat, Dimethyl-N-äthyl-α-aminobenzylphosphonat, Dimethyl-N-methyl-2-aminofurylmethylphosphonat,Diäthyl-N-methyl-2-amino-furylmethylphosphonat,Diäthyl-α-amino-α-methylpropylphosphonat, Diäthyl-N,N-dimethylamidophosphat, Diäthyl-N-methyl-α-aminofurylmethylphosphonat,Diäthyl-N-äthyl-α-aminofurylmethylphosphonat, Diisopropyl-N-methyl-α-aminofurylmethylphosphonat.

Als Emulgator setzt man 0,1 Masse% Kalziumalkylbenzolsulfonat mit 12 bis 14 C-Atomen zu. Als Adjuvans führt man in die Emulsion 0,01 Masse% Tetrahydrofuran ein. Der Verbrauch an Präparat beträgt 12 kg/ha. Als Kontrolle dienen Pflanzen, behandelt analog dem Beispiel 1. Die Prüfergebnisse sind in der Tabelle 2 angeführt. Die ähnlichen Ergebnisse sind bei der Behandlung der Pflanzen in der VI. Periode der Organogenese erhalten.

Tabelle 2

| lfd. Nr. | Beispiel Nr. | Anzahl von Körnern der Ähre im Isolator | Prozentsatz der Sterilität | Anzahl von Körnern bei freier Bestäubung | Prozentsatz des Ansetzens bei freier Bestäubung |
|---|---|---|---|---|---|
| 1 | Kontrolle | 32,1 | 0,0 | 36,8 | I00,0 |
| 2 | Beispiel 13 | 0,I | 99,7 | 33,I | 89,9 |
| 3 | Beispiel 14 | 0,3 | 99,I | 35,0 | 95,I |
| 4 | Beispiel 15 | 0,6 | 98,I | 32,8 | 89,I |
| 5 | Beispiel 16 | 2,8 | 9I,3 | 32,6 | 88,6 |
| 6 | Beispiel 17 | 0,0 | I00,0 | 32,I | 87,2 |
| 7 | Beispiel 18 | 0,0 | I00,0 | 34,5 | 93,8 |
| 8 | Beispiel 19 | 0,0 | I00,0 | 35,7 | 97,0 |
| 9 | Beispiel 20 | 3,8 | 88,2 | 36,0 | 97,8 |
| 10 | Beispiel 21 | 0,0 | I00,0 | 34,6 | 94,0 |
| 11 | Beispiel 22 | 0,2 | 99,4 | 35,9 | 97,6 |
| 12 | Beispiel 23 | 0,I | 99,7 | 36,3 | 98,6 |

Beispiele 24 bis 29

Pflanzen des Winterweizens Sorte Polesskaya-70 behandelt man in der fünften Periode der Organogenese (nach Kupermann) mit Hilfe einer Rückenspritze durch Zerstäubung einer 2%igen wässrigen Emulsion folgender Sterilisationsmittel: Diäthyl- α -oxyfurylmethylphosphonat, Diäthyl-N,N-dimethylamidophosphat . Diäthyl-N-methyl- α -aminofurylmethylphosphonat, Diäthyl- α -aminoäthylphosphonat, Diäthyl-N-äthyl- α -aminofurylmethylphosphonat, Diisopropyl-N-methyl- α -aminofurylmethylphosphonat. Als Emulgator setzt man 0,1 Masse% Kalziumalkylbenzolsulfonat mit 12 bis 14 C-Atomen zu. Als Adjvans führt man in die Emulsion 0,01 Masse% Dodezylsulfat ein. Der Verbrauch an Präparat beträgt 16 kg/ha. Als Kontrolle dienen Pflanzen, behandelt analog dem Beispiel 1.

Die Prüfergebnisse sind in der Tabelle 3 angeführt. Die ähnlichen Ergebnisse sind bei der Behandlung der Pflanzen in der VI. Periode der Organogenese erhalten.

Tabelle 3

| lfd Nr. | Beispiel Nr. | Anzahl von Körnern der Ähre im Isolator | Prozentsatz der Sterilität | Anzahl von Körnern bei freier Bestäubung | Prozentsatz des Ansetzens bei freier Bestäubung |
|---|---|---|---|---|---|
| 1 | Kontrolle | 3I,8 | 0,0 | 34,9 | I00,0 |
| 2 | Beispiel 24 | 3,9 | 83,7 | 30,6 | 87,7 |
| 3 | Beispiel 25 | 0,0 | I00,0 | 33,9 | 97,I |
| 4 | Beispiel 26 | 0,0 | I00,0 | 3I,8 | 9I,I |
| 5 | Beispiel 27 | 0,0 | I00,0 | 32,0 | 9I,7 |
| 6 | Beispiel 28 | 0,7 | 97,8 | 30,4 | 87,I |
| 7 | Beispiel 29 | 0,3 | 99,I | 33,7 | 96,6 |

Beispiele 30 bis 41

Pflanzen des Sommerweizens Moskobskaya 35 behandelt man in der VI. Periode der Organogenese (nach Kupermann) mit einer wässrigen 2%igen Emulsion folgender Sterilisationsmittel: Diäthyl-N-methyl- α -aminobenzylphosphonat, Diäthyl-N-phenyl- α -aminofurylmethylphosphonat, Dimethyl-N-äthyl- α -aminobenzylphosphonat, Dimethyl-N-methyl- α -aminofurylmethylphosphonat, Diäthyl-N-methyl- α -aminofurylmethylphosphonat, Diäthyl- α -amino- α -methylpropylphosphonat, Dimethylphosphit, Diammoniumphosphit, Diäthyl-N-äthyl- α -aminofurylmethylphosphonat, Methylammoniummonobutylphosphit, Diäthyl-N,N-dimethylamidophosphat, Diisopropyl-N-methyl- α -aminofurylmethylphosphonat. Als Emulgator setzt man 0,1 Masse% Kalziumalkylbenzolsulfonat mit 12 bis 14 C-Atomen zu und als Adjuvans setzt man 0,01 Masse% Dimethylformamid zu. Der Verbrauch an Präparat beträgt 10 kg/ha. Als Kontrolle dienen Pflanzen, behandelt mit einem Verdünner ohne Sterilisationsmittel.

Die Prüfergebnisse sind in der Tabelle 4 angeführt. Die ähnlichen Ergebnisse sind bei der Behandlung der Pflanzen in der V. Periode der Organogenese erhalten.

Tabelle 4

| lfd. Nr. | Beispiel Nr. | Anzahl von Körnern der Ähre im Isolator | Prozentsatz der Sterilität | Anzahl von Körnern bei freier Bestäubung | Prozentsatz des Ansetzens bei freier Bestäubung |
|---|---|---|---|---|---|
| 1 | Kontrolle | 27,5 | 0,0 | 33,2 | I00,0 |
| 2 | Beispiel 30 | 0,0 | I00,0 | 29,8 | 89,8 |
| 3 | Beispiel 31 | 0,I | 99,4 | 30,I | 90,7 |
| 4 | Beispiel 32 | 0,6 | 97,8 | 30,6 | 92,2 |
| 5 | Beispiel 33 | I,3 | 95,2 | 28,8 | 86,7 |
| 6 | Beispiel 34 | 0,I | 99,4 | 29,I | 87,6 |
| 7 | Beispiel 35 | 0,I | 99,4 | 3I,5 | 94,9 |
| 8 | Beispiel 36 | 0,0 | I00,0 | 28,4 | 85,5 |
| 9 | Beispiel 37 | 0,4 | 98,5 | 32,3 | 97,3 |
| I0 | Beispiel 38 | 0,0 | I00,0 | 30,7 | 92,5 |
| 11 | Beispiel 39 | 6,0 | 78,0 | 32,0 | 96,4 |
| 12 | Beispiel 40 | I,2 | 95,6 | 28,9 | 87,0 |
| 13 | Beispiel 41 | 0,I | 99,4 | 30,6 | 92,2 |

Beispielle 42 bis 47

Pflanzen des Sommerweizens Sorte Botanicheskaya 4 behandelt man in der VI. Periode der Organogenese (nach Kupermann) mit einer 2%igen wässrigen Emulsion folgender Sterilisationsmittel: Diäthyl- α -oxyfurylmethylphosphonat, Diäthyl-N,N-dimethylamidophosphat, Diäthyl-N-methyl- α -aminofurylmethylphosphonat, Diäthylphosphit, Diäthyl-N-äthyl- α -aminofurylmethylphosphonat, Diisopropyl-N-methyl- α -aminofurylmethylphosphonat. Als Emulgator setzt man 0,1 Masse% Kalziumalkylbenzolsulfonat mit 12 bis 14 C-Atomen zu. Als Adjuvans setzt man 0,01 Masse% Dimethylsulfoxid zu.

Der Verbrauch an Präparat beträgt 8 kg/ha. Als Kontrolle dienen Pflanzen, behandelt ähnlich mit den Beispielen 30-41.

Die Prüfergebnisse sind in der Tabelle 5 angeführt. Die ähnliche Ergebnisse sind bei der Behandlung der Pflanzen in der V. Periode der Organogenese erhalten.

Tabelle 5

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens der Körnern bei freier Bestäubung |
|---|---|---|---|---|---|
| 1 | Kontrolle | 28,2 | 0,0 | 30,I | I00,0 |
| 2 | Beispiel 42 | 0,0 | I00,0 | 27,8 | 92,4 |
| 3 | Beispiel 43 | 0,I | 99,7 | 28,I | 93,4 |
| 4 | Beispiel 44 | 0,0 | I00,0 | 28,8 | 95,7 |
| 5 | Beispiel 45 | 0,3 | 98,9 | 26,5 | 88,0 |
| 6 | Beispiel 46 | 0,0 | I00,0 | 23,6 | 78,I |
| 7 | Beispiel 47 | 0,I | 99,7 | 28,4 | 94,4 |

Beispiele 48 bis 54

Pflanzen Tritikale Sorte PRAG-109 behandelt man in der VI. Periode der Organogenese (nach Kupermann) mit einer 2%igen wässrigen Emulsion folgender Sterilisationsmittel: Diäthyl-N-phenyl- α -aminofurylmethylphosphonat, Dimethyl-N-äthyl- α -aminobenzylphosphonat, Diäthyl-N-methyl-2-aminofurylmethylphosphonat, Diäthyl-N,N-Dimethylamidophosphat, Diäthyl- α -aminoäthylphosphonat, Diäthyl-N-äthyl- α -aminofurylmethylphosphonat, Diisopropyl-N-methyl- α -aminofurylmethylphosphonat. Als Emulgator setzt man 0,1 Masse% Kalziumalkylbenzolsulfonat mit 12 bis 14 C-Atomen zu. Als Adjuvans setzt man 0,01 Masse% Tetrahydrofuran zu. Der Verbrauch an Präparat beträgt 20 kg/ha. Als Kontrolle dienen Pflanzen, behandelt analog dem beschriebenen in Beispiel 1. Die Prüfergebnisse sind in der Tabelle 6 angeführt.

Die ähnlichen Ergebnisse sind bei der Behandlung der Pflanzen in der V. Periode der Organogenese erhalten.

Tabelle 6

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| 1 | Kontrolle | 62,2 | 0,0 | 69,0 | I00,0 |
| 2 | Beispiel 48 | 0,0 | I00,0 | 58,8 | 85,2 |
| 3 | Beispiel 49 | 0,I | 99,7 | 63,I | 9I,4 |
| 4 | Beispiel 50 | 0,0 | I00,0 | 6I,6 | 89,3 |
| 5 | Beispiel 51 | 0,8 | 98,7 | 66,2 | 95,9 |
| 6 | Beispiel 52 | 2,6 | 96,8 | 6I,I | 88,6 |
| 7 | Beispiel 53 | 0,6 | 99,0 | 60,8 | 88,I |
| 8 | Beispiel 54 | I,I | 98,2 | 64,5 | 93,5 |

Beispiele 55 bis 57

Pflanzen Tritikale Sorte Amfidiploid-206 behandelt man analog zu Beispiel 54-60 beshriebenen in der V. und VI. Periode der Organogenese mit einer 2%igen wässrigen Emulsion folgender Sterilisationsmittel: Diäthyl- α -aminoäthylphosphonat, Diäthyl-N-äthyl- α -aminofurylmethylphosphonat, Diisopropyl-N-methyl- α -aminofurylmethylphosphonat. Der Verbrauch an Präparat beträgt 12 kg/ha. Die Prüfergebnisse sind in der Tabelle 7 angeführt.

Tabelle 7

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens der Körner bei freier Bestäubung |
|---|---|---|---|---|---|
| 1 | Kontrolle | 3I,7 | 0,0 | 36,6 | I00,0 |
| 2 | Beispiel 55 | 0,0 | I00,0 | 30,5 | 83,3 |
| 3 | Beispiel 56 | 0,0 | I00,0 | 33,8 | 92,3 |
| 4 | Beispiel 57 | 0,0 | I00,0 | 32,9 | 89,9 |

Beispiele 58 bis 69

Pflanzen des tetraploiden Roggens Sorte Belta behandelt man analog zu dem in Beispiel 1 beschriebenen mit einer 2%igen wässrigen Emulsion folgender Sterilisationsmittel: Diäthyl-N-methyl- α -aminobenzylphos-

phonat, Diäthyl-N-phenyl- α -aminofurylmethylphosphonat, Dimethyl-N-äthyl- α -aminobenzylphosphonat, Dimethyl-N-methyl- α -aminofurylmethylphosphonat, Diäthyl-N-methyl- α -aminofurylmethylphosphonat, Diäthyl- α -amino- α -methylpropylphosphonat, Diisopropylphosphit, Diäthyl-N,N-dimethylamidophosphat, Diäthyl-N-methyl- α -aminofurylmethylphosphonat, Diäthyl- α -aminoäthylphosphonat, Diäthyl-N-äthyl- α -aminofurylmethylphosphonat, Diisopropyl-N-methyl- α -aminofurylmethylphosphonat. Als Kontrolle dienen Pflanzen, behandelt analog zu dem in Beispiel 1 beschriebenen.

Der Verbrauch an Präparat beträgt 12 kg/ha. Die Prüfergebnisse sind in der Tabelle 8 angeführt.

Tabelle 8

| lfd Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens der Körner bei freier Bestäubung |
|---|---|---|---|---|---|
| 1 | Kontrolle | 43,3 | 0,0 | 47,I | I00,0 |
| 2 | Beispiel 58 | I,0 | 97,7 | 40,8 | 86,6 |
| 3 | Beispiel 59 | 0,I | 99,8 | 42,I | 89,4 |
| 4 | Beispiel 60 | 0,0 | I00,0 | 36,4 | 77,3 |
| 5 | Beispiel 61 | 0,I | 99,8 | 43,5 | 92,4 |
| 6 | Beispiel 62 | 0,2 | 99,5 | 44,3 | 94,0 |
| 7 | Beispiel 63 | 0,0 | I00,0 | 45,9 | 97,4 |
| 8 | Beispiel 64 | 3,I | 92,8 | 42,8 | 90,9 |
| 9 | Beispiel 65 | 0,8 | 98,2 | 45,8 | 97,2 |
| 10 | Beispiel 66 | 2,5 | 94,2 | 32,5 | 69,0 |
| 11 | Beispiel 67 | 0,0 | I00,0 | 44,2 | 93,8 |
| 12 | Beispiel 68 | 0,7 | 98,4 | 37,6 | 79,8 |
| 13 | Beispiel 69 | 0,0 | I00,0 | 42,5 | 90,2 |

Beispiele 70 bis 80

Pflanzen des diploiden Roggens Sorte Chulpan behandelt man in der VI. Periode der Organogenese mit einer 2%igen wässrigen Emulsion folgender Sterilisationsmittel: Diäthyl-N-methyl- α -aminobenzylphosphonat, Di-

äthyl-N-phenyl- $\alpha$ -aminofurylmethylphosphonat, Dimethyl-N-äthyl- $\alpha$ -aminobenzylphosphonat, Dimethyl-N-methyl- $\alpha$ -aminofurylmethylphosphonat, Diäthyl-N-methyl- $\alpha$ -aminofurylmethylphosphonat, Diäthyl- $\alpha$ -amino- $\alpha$ -metyl-propylphosphonat, Diäthyl-N,N-dimethylamidophosphat, Diäthyl-N-methyl- $\alpha$ -aminofurylmethylphosphonat, Diäthyl- $\alpha$ -aminoäthylphosphonat, Diäthyl-N-äthyl- $\alpha$ -aminofurylmethylphosphonat, Diisopropyl-N-methyl- $\alpha$ -aminofurylmethylphosphonat. Als Emulgator setzt man 0,1 Masse% Kalziumalkylbenzolsulfonat mit 12 bis 14 C-Atomen zu, als Adjuvans setzt man 0,01 Masse% Dimethylformamid zu. Der Verbrauch an Präparat beträgt 20 kg/ha. Als Kontrolle dienen Pflanzen, behandelt analog dem in Beispiel 1 beschriebenen.

Die Prüfergebnisse sind in der Tabelle 9 angeführt. Die ähnlichen Ergebnisse sind bei der Behandlung der Pflanzen in der V. Periode der Organogenese erhalten.

Tabelle 9

| lfd Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens der Körner bei freier Bestäubung |
|---|---|---|---|---|---|
| 1 | Kontrolle | 57,I | 0,0 | 64,7 | I00,0 |
| 2 | Beispiel 70 | 0,3 | 99,5 | 6I,8 | 95,5 |
| 3 | Beispiel 71 | 0,I | 99,8 | 60,6 | 93,7 |
| 4 | Beispiel 72 | 0,0 | I00,0 | 54,8 | 84,7 |
| 5 | Beispiel 73 | 0,6 | 99,0 | 58,I | 89,8 |
| 6 | Beispiel 74 | 0,4 | 99,3 | 62,6 | 96,8 |
| 7 | Beispiel 75 | 0,0 | I00,0 | 57,4 | 88,7 |
| 8 | Beispiel 76 | 0,7 | 98,8 | 60,7 | 93,8 |
| 9 | Beispiel 77 | 0,0 | I00,0 | 59,4 | 9I,8 |
| I0 | Beispiel 78 | 0,9 | 98,4 | 62,3 | 96,3 |
| 11 | Beispiel 79 | 0,7 | 98,8 | 63,8 | 98,6 |
| 12 | Beispiel 80 | 0,0 | I00,0 | 6I,6 | 95,2 |

Beispiele 81 bis 92

Pflanzen des diploiden Roggens Sorte Kharkovskaya-55 behandelt man, in der VI. Periode der Orgenogenese mit einer 2%igen wässrigen Emulsion folgender Sterilisationsmittel: Diäthyl-N-methyl- α -aminobenzylphosphonat, Diäthyl-N-phenyl- α -aminofurylmethylphosphonat, Dimethyl-N-äthyl- α -aminobenzylphosphonat, Dimethyl-N-methyl- α -aminofurylmethylphosphonat, Diäthyl-N-methyl- α -aminofurylmethylphosphonat, Diäthyl- α -amino- α -methylpropylphosphonat, Dimethylphosphit, Diäthyl-N,N-dimethylamidophosphat, Diäthyl-N-methyl- α -aminofurylmethylphosphonat, Diäthyl- α -aminoäthylphosphonat, Diäthyl-N-äthyl- α -aminofurylmethylphosphonat bzw. Diisopropyl-N-methyl- α -aminofurylmethylphosphonat. Als Emulgator setzt man 0,1 Masse% Kalziumalkylbensolsulfonat mit 12 bis 14 C-Atomen zu und als Adjuvans setzt man 0,01 Masse % Dodezylsulfat zu. Der Verbrauch an Präparat beträgt 12 kg/ha. Als Kontrolle dienen Pflanzen, behandelt analog zu dem in Beispiel 1 beschriebenen. Die Prüfergebnisse sind in der Tabelle 10 angeführt. Die ähnlichen Ergebnisse sind bei der Behandlung der Pflanzen in der V. Periode der Orgenogenese erhalten.

Tabelle 10

| lfd Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens der Körner bei freier Bestäubung |
|---|---|---|---|---|---|
| 1 | Kontrolle | 38,4 | 0,0 | 46,8 | I00,0 |
| 2 | Beispiel 81 | 0,0 | I00,0 | 40,6 | 86,8 |
| 3 | Beispiel 82 | 0,2 | 99,5 | 42,5 | 90,8 |
| 4 | Beispiel 83 | 0,0 | I00,0 | 39,8 | 85,0 |
| 5 | Beispiel 84 | 0,7 | 98,2 | 44,I | 94,2 |
| 6 | Beispiel 85 | 0,0 | I00,0 | 32,6 | 69,6 |
| 7 | Beispiel 86 | 0,I | 99,7 | 43,7 | 93,4 |
| 8 | Beispiel 87 | 0,0 | I00,0 | 40,4 | 86,3 |
| 9 | Beispiel 88 | 0,6 | 98,4 | 44,3 | 94,7 |
| IO | Beispiel 89 | 0,7 | 98,2 | 40,8 | 87,2 |
| 11 | Beispiel 90 | 0,0 | I00,0 | 44,9 | 95,9 |
| 12 | Beispiel 91 | 0,2 | 99,5 | 40,2 | 85,9 |
| 13 | Beispiel 92 | 0,0 | I00,0 | 39,5 | 84,4 |

Beispiele 93 bis 102

Pflanzen der Hirse Sorte Mironovskaya 94 behandelt man ähnlich dem Beispiel 14 mit einer 1%igen wässrigen Emulsion folgender Sterilisationsmittel: Diäthyl-N-phenyl- α -aminofurylmethylphosphonat, Dimethyl-N-äthyl- α -aminobenzylphosphonat, Dimethyl-N-methyl- α -aminofurylmethylphosphonat, Diäthyl-N-methyl- α -aminofurylmethylphosphonat, Diäthyl- α -amino- α -methylpropylphosphonat, Diäthyl-N,N-dimethylamidophosphat, Diäthyl-N-methyl- α -aminofurylmethylphosphonat, Diäthyl- α -aminoäthylphosphonat, Diäthyl-N-äthyl- α -aminofurylmethylphosphonat bzw. Diisopropyl-N-methyl- α -aminofurylmethylphosphonat. Der Verbrauch an Präparat beträgt 6 kg/ha. Die Prüfergebnisse sind in der Tabelle 11 angeführt.

Tabelle 11

| lfd Nr. | Beispiel Nr. | Anzahl von Körnern der Rispe im Isolator | Prozentsatz der Sterilität | Anzahl von Körner der Rispe bei freier Bestäubung | Prozentsatz des Ansetzens bei freier Bestäubung |
|---|---|---|---|---|---|
| 1 | Kontrolle | 320,5 | 0,0 | 379,5 | I00,0 |
| 2 | Beispiel 93 | 0,0 | I00,0 | 3I5,6 | 83,2 |
| 3 | Beispiel 94 | 0,0 | I00,0 | 294,8 | 77,7 |
| 4 | Beispiel 95 | 0,0 | I00,0 | 326,4 | 86,0 |
| 5 | Beispiel 96 | 0,0 | I00,0 | 30I,5 | 79,4 |
| 6 | Beispiel 97 | 0,0 | I00,0 | 359,2 | 94,6 |
| 7 | Beispiel 98 | 0,0 | I00,0 | 300,7 | 79,2 |
| 8 | Beispiel 99 | 0,0 | I00,0 | 348,6 | 9I,8 |
| 9 | Beispiel I00 | 0,0 | I00,0 | 284,3 | 74,9 |
| 10 | Beispiel 101 | 0,0 | I60,0 | 352,5 | 92,9 |
| 11 | Beispiel 102 | 0,0 | I00,0 | 362,9 | 95,6 |

Beispiele 103 bis 111

Pflanzen der Hirse K-9693 Sorte Kormovoe-1 behandelt man analog dem Beispiel 1 mit einer 1%igen wässrigen Emulsion folgender Sterilisationsmittel: Diäthyl-N-phenyl- α -aminofurylmethylphosphonat, Diäthylphosphit, Diisopropylphosphit, Dimethylammoniummonomethylphosphit, Diäthyl- α -oxyfurylmethylphosphonat, Diäthyl-N,N-dimethylamidophosphat, Diäthyl- α -aminoäthylphosphonat, Diäthyl-N-äthyl-2-aminofurylmethylphosphonat, Diisopropyl-N-methyl- α -aminofurylmethylphosphonat bzw. Diisopropyl-N-methyl- α -aminofurylmethylphosphonat. Der Verbrauch an Präparat beträgt 6 kg/ha. Die Prüfergebnisse sind in der Tabelle 12 angeführt.

Tabelle 12

| lfd Nr. | Beispiel Nr. | Anzahl von Körnern der Rispe im Isolator | Prozentsatz der Sterilität | Anzahl von Körnern der Rispe bei freier Bestäubung | Prozentsatz des Ansetzens bei freier Bestäubung |
|---|---|---|---|---|---|
| 1 | Kontrolle | I25,0 | 0,0 | I46,7 | I00,0 |
| 2 | Beispiel 103 | 0,0 | I00,0 | I25,6 | 85,6 |
| 3 | Beispiel I04 | 0,0 | I00,0 | I38,9 | 94,7 |
| 4 | Beispiel 105 | 0,0 | I00,0 | I20,2 | 8I,9 |
| 5 | Beispiel 106 | 0,0 | I00,0 | II8,6 | 80,8 |
| 6 | Beispiel I07 | 0,0 | I00,0 | I34,7 | 9I,8 |
| 7 | Beispiel I08 | 0,0 | I00,0 | II2,4 | 76,6 |
| 8 | Beispiel I09 | 0,0 | I00,0 | I3I,8 | 89,8 |
| 9 | Beispiel II0 | 0,0 | I00,0 | I27,7 | 87,0 |
| I0 | Beispiel 111 | 0,0 | I00,0 | I35,4 | 92,3 |

Beispiele 112 bis 118

Pflanzen der Sommenblume Sorte Peredovik, Sorte BH ИИ MK 8931 und Linie BK-119 behandelt man analog dem Beispiel 1 mit einer 1%igen wässrigen Emulsion folgender Sterilisationsmittel: Diäthyl- α -aminoäthylphosphonat, Diäthyl- α -aminofurylmethylphosphonat, Diisopropyl-N-methyl- α -aminofurylmethylphosphonat, Diäthyl- α -amino-äthylphosphonat, Diäthyl-N,N-dimethylamidophosphat, Diäthyl- α -aminoäthylphosphonat bzw. Diäthyl-N-phenyl- α -aminofurylmethylphosphonat. Der Verbrauch an Präparat beträgt 6 kg/ha. Die Prüfergebnisse sind in der Tabelle 13 angeführt.

Tabelle 13

| lfd Nr. | Beispiel Nr. | Prozentsatz der Sterilität | Ansetzen von Achänen bei freier Bestäubung | Masse von 1000 Achänen in g | Ölgehalt von Achänen in % | Waschtumsenergie in % |
|---|---|---|---|---|---|---|
| | | Sonnenblume Sorte Peredovik | | | | |
| 1 | Kontrolle | 0,2 | 85,0 | 84,0 | 54,7 | I00 |
| 2 | Beispiel 112 | I00 | 84,2 | 84,3 | 52,2 | I00 |
| 3 | Beispiel 113 | I00 | 83,3 | II0,0 | 54,9 | I00 |
| 4 | Beispiel 114 | I00 | 8I,8 | 83,4 | 52,8 | I00 |
| | | Sonnenblume Sorte BH ИИ MK 8931 | | | | |
| 5 | Kontrolle | 0,5 | 85,7 | 83,0 | 54,7 | I00 |
| 6 | Beispiel 115 | I00 | 84,2 | 83,7 | 55,I | I00 |
| 7 | Beispiel 116 | I00 | 83,6 | 84,2 | 54,0 | I00 |
| | | Sonnenblume Linie BK-119 | | | | |
| 8 | Kontrolle | 2,0 | 85,0 | 60,0 | 5I,0 | I00 |
| 9 | Beispiel 117 | I00 | 82,3 | 58,6 | 52,8 | I00 |
| I0 | Beispiel II8 | I00 | 83,8 | 6I,4 | 5I,6 | I00 |

Beispiele 119 bis 122

Pflanzen des Winterweizens Sorte Mironovskaya 808 behandelt man in der V. Periode der Organogenese mit einer 2%igen wässrigen Emulsion folgender Gemische der Sterilisationsmittel (genommen in einem Verhältnis 1:1): Diisopropyl-N-methyl- α -aminofurylmethylphosphonat und Dimethylphosphit, Diäthyl-N-methyl- α -aminofurylmethylphosphonat und Diäthyl- α -aminoäthylphosphonat, Diäthyl-N,N-dimethylamidophosphat und Methylammoniummonobutylphosphit bzw. Diäthyl-N-phenyl- α -aminofurylmethylphosphonat und Diäthylphosphit.

Als Amulgator setzt man 0,1 Masse% Kalziumalkylbensolsulfonat mit 12 bis 14 C-Atomen zu. Als Adjuvans setzt man 0,01 Masse% Dodezylsulfat zu. Der Verbrauch an Präparat beträgt 12 kg/ha. Als Kontrolle dienen Pflanzen, behandelt analog zu dem in Beispiel 1 beschriebenen. Die Prüfergebnisse sind in der Tabelle 14 angeführt. Die ähnlichen Ergebnisse sind bei der Behandlung der Pflanzen in der VI. Periode der Organogenese erhalten.

Tabelle 14

| lfd Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens der Körnern bei freier Bestäubung |
|---|---|---|---|---|---|
| 1 | Kontrolle | 38,3 | 0,0 | 41,0 | 100,0 |
| 2 | Beispiel 119 | 0,0 | 100 | 39,2 | 95,6 |
| 3 | Beispiel 120 | 0,0 | 100 | 38,6 | 94,1 |
| 4 | Beispiel 121 | 0,0 | 100 | 40,8 | 99,5 |
| 5 | Beispiel 122 | 0,0 | 100 | 39,7 | 96,8 |

Beispiele 123 bis 124

Pflanzen des Sommerweizens Sorte Mironovskaya 35 behandelt man in der V. Periode der Organogenese mit einer 1%igen Emulsion folgender Gemische der Sterilisationsmittel (genommen in einem Verhältnis 1:1): Diäthyl-N-äthyl-α-aminofurylmethylphosphonat und Diäthyl-N-methyl-α-aminofurylmethylphosphonat, Dimethyl-N-methyl-α-aminofurylmethylphosphonat und Dimethylphosphit. Als Emulgator setzt man 0,1 Masse% Kalziumalkylbenzolsulfonat mit 12 bis 14 C-Atomen zu. Als Adjuvans setzt man 0,01 Masse% Dimethylsulfoxid zu. Der Verbrauch an Apräparat beträgt 6 kg/ha. Als Kontrolle dienen Pflanzen, behandelt analog zu dem in Beispiel 1 beschriebenen. Die Prüfergebnisse sind in der Tabelle 15 angeführt. Die ähnlichen Ergebnisse sind bei der Behandlung der Pflanzen in der VI. Periode der Organogenese erhalten.

Tabelle 15

| lfd Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens der Körner bei freier Bestäubung |
|---|---|---|---|---|---|
| 1 | Kontrolle | 27,5 | 0,0 | 33,2 | 100,0 |
| 2 | Beispiel 123 | 0,0 | 100 | 30,6 | 92,2 |
| 3 | Beispiel 124 | 0,0 | 100 | 31,8 | 95,8 |

Beispiele 125 bis 128

Pflanzen Tritikale Sorte PRAG-109 behandelt man in der V. Periode der Organogenese mit einer wässrigen Emulsion folgender Gemische von Sterilisationsmittel: (genommen in einem Verhältnis von 1:1): Diäthyl-N-phenyl- α -aminofurylmethylphosphonat und Diäthylphosphit, Diäthyl-N-methyl- α -aminobenzolphosphonat und Diäthyl- α -aminoäthylphosphonat, Diäthyl-N,N-dimethylamidophosphat und Dimethylphosphit, Diammoniumphosphit und Diäthyl-N-methyl- α -aminofurylmethylphosphonat. Als Emulgator setzt man 0,1 Masse% Kalziumalkylbenzolsulfonat mit 12 bis 14 C-Atomen und als Adjuvans 0,01 Masse% Tetrahydrofuran zu. Der Verbrauch an Präparat beträgt 12 kg/ha. Als Kontrolle dienen Pflanzen, behandelt analog zu dem in Beispiel 1 beschriebenen. Die Prüfergebnisse sind in der Tabelle 16 angeführt. Die ähnlichen Ergebnisse sind bei der Behandlung der Pflanzen in der VI. Periode der Organogenese erhalten.

Tabelle 16

| lfd Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| 1 | Kontrolle | 62,2 | 0,0 | 69,0 | I00,0 |
| 2 | Beispiel 125 | 0,0 | I00 | 63,4 | 92,0 |
| 3 | Beispiel 126 | 0,0 | I00 | 60,I | 87,I |
| 4 | Beispiel 127 | 0,0 | I00 | 59,8 | 86,7 |
| 5 | Beispiel 128 | 0,0 | I00 | 62,2 | 90,1 |

## Industrielle Verwendbarkeit

Das erfindungsgemässe Verfahren findet seine Anwendung in der Selektion und im Samenbau bei der Herstellung von hochproduktiven Sorten und Hybriden der landwirtschaftlichen Kulturen.

PATENTANSPRÜCHE

1. Verfahren zur Sterilisation der Staubbeutel von Pflanzen durch ihre Behandlung mit einem Sterilisationsmittel in Verbindung mit einem Verdünner in der fünften und/oder sechsten Periode der Organogenese, dadurch gekennzeichnet, dass als Sterilisationsmittel Phosphorsäurederivate der allgemeinen Formel:

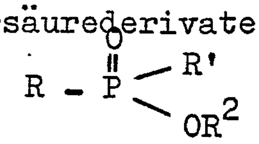

worin R für H, Alkoxy mit 1 bis 4 C-Atomen, Dimethylamin, 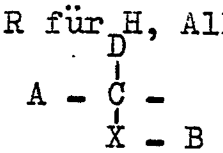 steht, worin X = O, NH, B = H, Alkyl mit 1 bis 4 C-Atomen, Phenyl; D = H, $CH_3$; A Alkyl mit 1 bis 4 C-Atomen, Phenyl, Furyl bedeutet;
R' für OH, $ONH_4$, $OAlk(C_1-C_4)$, Phenyl steht,
$R^2$ für Alkyl mit 1 bis 4 C-Atomen, Na, $NH_4$, $NH_3Alk(C_1-C_4)$, $NH_2(Alk)_2(C_1-C_4)$ steht, oder deren Gemische dienen.

2. Verfahren nach Anspruch 1, dadurch gekennzeichnet, dass man genannten Phosphorsäurederivate in Verbindung mit einem Verdünner, Wasser, in Form einer 0,1-2%igen wässrigen Emulsion verwendet.

3. Verfahren nach Anspruch 1-2, dadurch gekennzeichnet, dass man als Pflanzen, behandelt mit dem Sterilisationsmittel, Graspflanzen oder Sonnenblume verwendet.

4. Verfahren nach Anspruch 1 bis 3, dadurch gekennzeichnet, dass man zur Sicherstellung eines hohen Sterilisationseffektes der Staubbeutel unter ungünstigen Klimabedingungen eine wiederholte Behandlung der Pflanzen mit dem Sterilisationsmittel in der fünften und/oder sechsten Periode der Organogenese durchführt.

# INTERNATIONAL SEARCH REPORT

International Application No PCT/SU 88/00058

**I. CLASSIFICATION OF SUBJECT MATTER** (if several classification symbols apply, indicate all) [6]

According to International Patent Classification (IPC) or to both National Classification and IPC

$IPC^4$ - A 01 N 57/02, A 01 H 1/02

**II. FIELDS SEARCHED**

Minimum Documentation Searched [7]

| Classification System | Classification Symbols |
|---|---|
| $IPC^4$ | A 01 N 57/02 ÷ 57/08, 57/10 ÷ 57/32, A 01 H 1/02 ÷ 1/04 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | SU,A1,640710, (Vsesojuzny ordena Lenina i ordena Druzhby narodov nauchno-issledovatelsky institut rastenievodstva im N.N.Vavilova et al.) 08 January 1979 (08.01.79) | 1-3 |
| A | GB,A,2140003, (Shell International Research Maatschapij B.V.), 21 November 1984 (21.11.84) | 1 |
| A | SU,A1,640711,(Vsesojuzny ordena Lenina i ordena Druzhby narodov nauchno- issledovatelsky institut rastenievodstva im N.N.Vavilova et al.) 08 January 1979 (08.01.79) | 1-3 |
| A | SU,A3,965337, (Shell International Research Maatschapij B.V.), 07 October 1982 (07.10.82) | 1-4 |
| A | SU,A3,931087(Rom and Haas Company), 23 May 1982 (23.05.82) | 1-4 |
| A | SU,A1,829058 (Laboratoria geterozisa Vsesojuznogo ordena Lenina i ordena Druzhby narodov nauchno-issledovatelskogo instituta rastenievodstava im. N.N.Vavilova et al.)15 May 1981 (15.05.81) | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 10 October 1988 (10.10.88) | 16 December 1988 (16.12.88) |
| **International Searching Authority** | **Signature of Authorized Officer** |
| ISA/SU | |